# EUROPÄISCHE PATENTSCHRIFT

(11) **EP 1 989 470 B1**
(45) Veröffentlichungstag und Bekanntmachung des Hinweises auf die Patenterteilung: **11.04.2012**
(21) Anmeldenummer: 07711590.5
(22) Anmeldetag: 20.02.2007
(51) Int. Cl.: F16H 61/12

(54) **SICHERHEITSKONZEPT FÜR EINE GETRIEBESTELLVORRICHTUNG**
SAFETY CONCEPT FOR A TRANSMISSION ACTUATOR DEVICE
CONCEPT DE SÉCURITÉ POUR UN DISPOSITIF DE POSITIONNEMENT À ENGRENAGE

(30) Priorität: 22.02.2006 DE 102006008575
(43) Veröffentlichungstag der Anmeldung: 12.11.2008
(73) Patentinhaber: KNORR-BREMSE Systeme für Nutzfahrzeuge GmbH, 80809 München (DE)
(72) Erfinder: BEYSE, Thorsten, 71701 Schwieberdingen (DE)
(74) Vertreter: Mattusch, Gundula
(86) Internationale Anmeldenummer: PCT/EP2007/001443
(87) Internationale Veröffentlichungsnummer: WO 2007/096126

(56) Entgegenhaltungen:
- DE-A1- 19 957 151

## Beschreibung

Die vorliegende Erfindung betrifft eine Getriebestellvorrichtung mit einer Mehrzahl von Ventilen und mit einem Controller, der dazu ausgelegt ist, die Mehrzahl von Ventilen durch Ansteuersignale anzusteuern, wobei sie eine Schnittstelle für einen weiteren Controller aufweist, der primär zur Ansteuerung von anderen Komponenten als der Getriebestellvorrichtung vorgesehen ist, und wobei über die Schnittstelle durch weitere Ansteuersignale zumindest einige Ventile der Mehrzahl von Ventilen angesteuert werden können.

Weiterhin betrifft die Erfindung eine Kraftfahrzeugkomponente, insbesondere einen Fahrzeugführungsrechner, die primär zur Ansteuerung von anderen Komponenten eines Kraftfahrzeuges als einer Getriebestellvorrichtung vorgesehen ist, wobei die Kraftfahrzeugkomponente dazu ausgelegt ist, zumindest einige Ventile einer Mehrzahl von Ventilen der Getriebestellvorrichtung zumindest dann anzusteuern, wenn ein der Getriebestellvorrichtung zugeordneter Controller zumindest ein Ventil der Mehrzahl von Ventilen über Ansteuersignale nicht erfolgreich ansteuern kann, und wobei sie eine Kraftfahrzeugkomponenten-Schnittstelle aufweist, über die sie die zumindest einigen Ventile der Mehrzahl von Ventilen der Getriebestellvorrichtung ansteuern kann.

Die Erfindung betrifft auch ein Verfahren zur Herstellung eines Fail-Safe-Zustandes in einer solchen Getriebestellvorrichtung.

Es sind sowohl hydraulisch als auch pneumatisch betriebene Getriebestellvorrichtungen bekannt, wobei Letztere insbesondere auf dem Nutzfahrzeugsektor eingesetzt werden. Dabei steuert zumindest ein der Getriebestellvorrichtung zugeordneter Controller Ventile, insbesondere Magnetventile, derart an, dass Kolben durch das jeweilige Druckmittel in verschiedene Stellungen gebracht werden. Aus der Kombination der verschiedenen Kolbenstellungen ergibt sich ein bestimmtes Übersetzungsverhältnis beziehungsweise ein bestimmter Gang. Da über das Übersetzungsverhältnis die Geschwindigkeit des Fahrzeugs beeinflusst werden kann, erfüllt der Controller der Getriebestellvorrichtung eine sicherheitsrelevante Aufgabe. Dies gilt insbesondere in Fällen, in denen der Controller der Getriebestellvorrichtung nicht nur die Kolbenstellungen steuert oder regelt sondern auch die Kupplung des Fahrzeugs, über die der Kraftfluss zum Motor geöffnet oder geschlossen werden kann. Aufgrund der sicherheitsrelevanten Funktion des Controllers der Getriebestellvorrichtung ist es erforderlich, dass im Falle eines Elektronik-Defekts oder eines Elektronik-Ausfalls ein Fail-Safe-Zustand erreicht wird.

Bei hydraulisch angetriebenen Getriebestellvorrichtungen ist es in einigen Fällen möglich, den Fail-Safe-Zustand im Falle eines Elektronik-Defekts oder -Ausfalls durch die Hydraulik sicherzustellen. In diesen Fällen kann auf redundante Elektronikstrukturen verzichtet werden, da ein Elektronik-Ausfall nicht zu einem sicherheitskritischen Zustand führt.

Bei pneumatisch angetriebenen Getriebestellvorrichtungen kann der Fail-Safe-Zustand in der Regel nicht durch die Pneumatik alleine erreicht werden. Daher werden insbesondere im Zusammenhang mit pneumatisch angetriebenen Getriebestellvorrichtungen zumindest einige Elektronikstrukturen redundant vorgesehen.

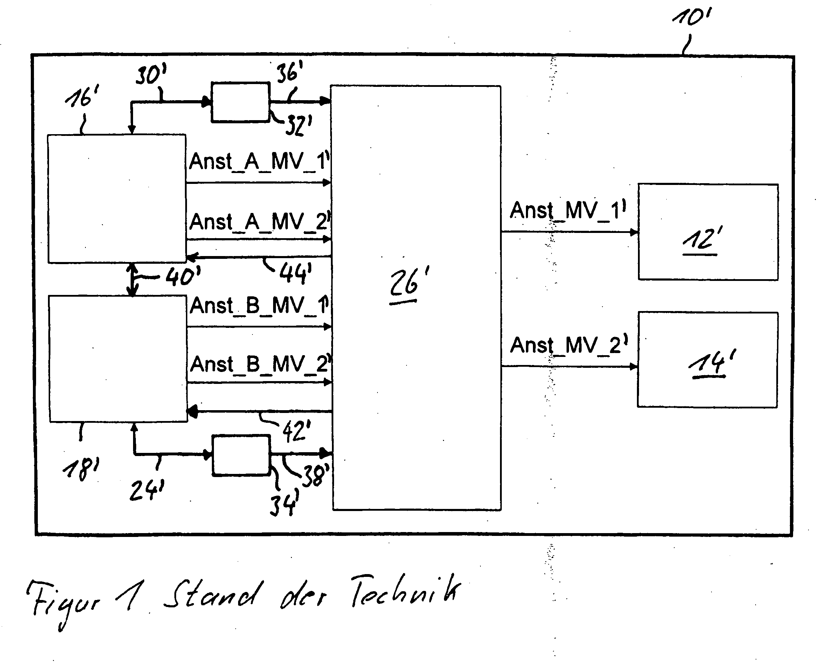

Figur 1 zeigt eine mit redundanten Elektronikstrukturen ausgestatte Getriebestellvorrichtung gemäß dem Stand der Technik in schematischer Blockschaltbilddarstellung. Die bekannte, in Figur 1 dargestellte Getriebestellvorrichtung 10' umfasst eine Mehrzahl von Magnetventilen, von denen nur die Ventile 12' und 14' dargestellt sind. Die Ventile 12', 14' werden über eine Zugriffskontrolleinrichtung 26' von einem Controller 16' und einem weiteren Controller 18' angesteuert. Der Controller 16' wird von einem Watchdog 32', d.h. einer Einheit zur Überwachung der ordnungsgemäßen Funktion eines (Mikro-) Controllers, überwacht, der zu diesem Zweck Signal 30' mit der Controller 16' austauscht. Kommt der Watchdog 32' zu dem Ergebnis, dass der Controller 16' ordnungsgemäß funktioniert, so teilt er dies der Zugriffskontrolleinrichtung 26' über ein Freigabesignal 36' mit. In ähnlicher Weise wird der weitere Controller 18' von einem weiteren Watchdog 34' überwacht, der zu diesem Zweck Signale 24' mit dem weiteren Controller 18' austauscht. Kommt der weitere Watchdog 34' zu dem Ergebnis, dass der weitere Controller 18' ordnungsgemäß funktioniert, so teilt er dies der Zugriffskontrolleinrichtung 26' über ein weiteres Freigabesignal 38' mit. Der Controller 16' und der weitere Controller 18' sind dazu in der Lage Signale 40' auszutauschen, beispielsweise um Funktionsweise aneinander anzupassen oder um Informationen auszutauschen, die nur einer der Controller 16', 18' erhält. Weiterhin kann der erste Controller 16' Signale 44' mit der Zugriffkontrolleinrichtung 26' austauschen, während der weitere Controller 18' Signale 42' mit der Zugriffskontrolleinrichtung 26' austauschen kann. Über die Signale 42', 44' können der Controller 16' und der weitere Controller 18' beispielsweise auf den aktuellen Zustand der Getriebestellvorrichtung schließen. Der Controller 16' liefert ein Ansteuersignal Anst_A_MV_1', das für die Ansteuerung des Ventils 12' vorgesehen ist, und ein Ansteuersignal Anst_A_MV_2', das zur Ansteuerung des Ventils 14' vorgesehen ist. Der weitere Controller 18' liefert ein Ansteuersignal Anst_B_MV_1', das ebenfalls zur Ansteuerung des Ventils 12' vorgesehen ist, und ein Ansteuersignal Anst_B_MV_2', das ebenfalls zur Ansteuerung des Ventils 14'-vorgesehen ist. Wenn der Watchdog 32' und der Watchdog 34' die Freigabesignale 36', 38' anlegen, nimmt die Zugriffskontrolleinrichtung 26' auf der Grundlage der ihre vorliegenden Informationen eine Plausibilitätsprüfung der Ansteuersignale Anst_A_MV_1' und Anst_B_MV_1' bzw. Anst_A_MV_2' und Anst_B_MV_2' vor und leitet ein Ventilansteuersignal Anst_MV_1' an das Ventil 12' und ein Ventilansteuersignal Anst_MV_2' an das Ventil 14' weiter, wenn die Plausibilitätsprüfung bestanden wurde. Somit bilden der Controller 16' und der weitere Controller 18' eine redundante Struktur, die gewährleistet, dass ein Fail-Safe-Zustand (oder ein Notbetrieb) auch dann erreicht werden kann, wenn der Controller 16' oder der weitere Controller 18' ganz oder teilweise ausfällt.

Insbesondere wenn der Controller 16' und der weitere Controller 18' auf einer gemeinsamen Platine angeordnet sind, sind jedoch auch bei dieser Lösung Fehler denkbar, bei denen der Controller 16' und der Controller 18' gleichzeitig ausfallen, so dass ein sicherheitskritischer Zustand eintritt. Darüber hinaus ist das Vorsehen von zwei redundanten Controllern mit hohen Kosten verbunden.

Aus der DE 199 57 151 A1 ist eine Getriebestellvorrichtung nach dem Oberbegriff des unabhängigen Anspruchs 1 sowie eine Kraftfahrzeugkomponente nach dem Oberbegriff des unabhängigen Anspruchs 5 bekannt.

Der Erfindung liegt die Aufgabe zugrunde, ein Sicherheitskonzept für eine Getriebestellvorrichtung anzugeben, mit dem die Sicherheit erhöht und die Kosten gesenkt werden können.

Diese Aufgabe wird durch die Merkmale der unabhängigen Ansprüche gelöst.

Vorteilhafte Ausführungsformen und Weiterbildungen der Erfindung ergeben sich aus den abhängigen Ansprüchen.

Die erfindungsgemäße Getriebestellvorrichtung baut auf dem gattungsgemäßen Stand der Technik dadurch auf, dass sie über die Schnittstelle zusätzlich zu den weiteren Ansteuersignalen zumindest ein weiteres Signal empfangen kann, das anzeigt, ob der weitere Controller ordnungsgemäß arbeitet, und dass sie zusätzlich zu den Ansteuersignalen ein weiteres Signal erzeugen kann, das anzeigt, ob der Controller ordnungsgemäß arbeitet. Bei dieser Lösung wird die für das Erreichen des Fail-Safe-Zustandes erforderliche Redundanz durch einen weiteren Controller erzeugt, der primär zur Ansteuerung von anderen Komponenten als der Getriebestellvorrichtung vorgesehen und daher ohnehin im Fahrzeug vorhanden ist. Da somit nur ein Controller der Getriebestellvorrichtung baulich zugeordnet ist und sich der weitere Controller in einem räumlichen Abstand von der Getriebestellvorrichtung befindet, verringert sich die Anzahl von potenziellen Fehlern, bei denen beide Controller gleichzeitig ausfallen (z.B. Ausfall der gemeinsamen Stromversorgung, Platinenbruch usw.), und die Sicherheit wird erhöht. Dies gilt insbesondere, wenn die beiden Controller über unterschiedliche Kabelbäume angeschlossen sind. Da im Vergleich zum Stand der Technik in der erfindungsgemäßen Getriebestellvorrichtung ein Controller entfallen kann, sinken die Kosten der Elektronik. Die Leiterplatine beziehungsweise der Hybrid kann kleiner dimensioniert werden, das heißt es wird weniger Platz im Fahrzeug benötigt. Ferner ist bei der erfindungsgemäßen Getriebestellvorrichtung vorgesehen, dass sie über die Schnittstelle zumindest ein Signal empfangen kann, das anzeigt, ob der weitere Controller ordnungsgemäß arbeitet. Bei diesem Signal kann es sich insbesondere um ein Freigabesignal handeln, beispielsweise um ein von einem dem weiteren Controller zugeordneten Watchdog erzeugtes Freigabesignal.

Für die erfindungsgemäße Getriebestellvorrichtung wird bevorzugt, dass die Ansteuerung von zumindest einigen Ventilen der Mehrzahl von Ventilen über eine Zugriffskontrolleinrichtung erfolgt. Ähnlich wie beim Stand der Technik kann die Zugriffskontrolleinrichtung insbesondere die von dem Controller und dem weiteren Controller gelieferten Signale auf Plausibilität prüfen.

In diesem Zusammenhang wird weiterhin bevorzugt, dass der Controller zur Ansteuerung der Ventile Ansteuersignale erzeugt, dass der weitere Controller zur Ansteuerung der Ventile weitere Ansteuersignale erzeugt, und dass die Zugriffskontrolleinrichtung auf der Grundlage des Signals, des weiteren Signals, der Ansteuersignale und der weiteren Ansteuersignale Ventilansteuerungssignale bilden kann. Sofern es sich bei der erfindungsgemäßen Getriebestellvorrichtung um eine Weiterbildung des Eingangs anhand von Figur 1 erläuterten Standes der Technik handelt, ermöglicht es diese Lösung, dass die Schnittstelle in einfacher Weise dadurch geschaffen wird, dass die beim Stand der Technik mit dem weiteren Controller in Verbindung stehenden Leitungen nach außen geführt werden.

Bei einer besonders bevorzugten Weiterbildung der erfindungsgemäßen Getriebestellvorrichtung ist vorgesehen, dass der weitere Controller Bestandteil einer Kraftfahrzeugkomponente, insbesondere in Form eines Fahrzeugführungsrechners, ist oder diese bildet. Beispielsweise ein derartiger Fahrzeugführungsrechner ist vor allem bei modernen Nutzfahrzeugen standardmäßig vorgesehen, wobei es mit geringem Aufwand möglich ist, bekannte Fahrzeugführungsrechner um die Funktionalität zu erweitern, die zur Verwirklichung der Erfindung erforderlich ist. Generell besteht ein für die Erfindung wesentlicher Gedanke darin, ohnehin im Fahrzeug vorhandene Rechenleistung als Ersatz für den weiteren Controller zu nutzen. Gegebenenfalls kann die Schnittstelle hinsichtlich der von dem Fahrzeugsführungsrechner kommenden Signale und der an diesen weitergeleiteten Signale eine Signalanpassung vornehmen, falls dies erforderlich ist.

Die erfindungsgemäße Kraftfahrzeugkomponente baut auf dem gattungsgemäßen Stand der Technik dadurch auf, dass die Kraftfahrzeugkomponenten-Schnittstelle zum Empfang von zumindest einem von der Getriebestellvorrichtung zusätzlich zu den Ansteuersignalen bereitgestellten Signal ausgelegt ist, über das die Kraftfahrzeugkomponente auf Zustände in der Getriebestellvorrichtung schließen kann. Durch diese Lösung kann beispielsweise die Funktionalität eines bekannten Fahrzeugführungsrechners so erweitert werden, dass er, neben seinen primären Aufgaben, zusätzlich die Aufgabe des beim Stand der Technik in der Getriebestellvorrichtung vorgesehenen weiteren Controllers übernehmen kann. Dadurch ergeben sich die im Zusammenhang mit der erfindungsgemäßen Getriebestellvorrichtung erläuterten Eigenschaften und Vorteile in gleicher oder ähnlicher Weise, weshalb zur Vermeidung von Wiederholungen auf die entsprechenden Ausführungen verwiesen wird. Bei der erfindungsgemäßen Kraftfahrzeugkomponente ist weiterhin vorgesehen, dass sie eine Kraftfahrzeugkomponenten-Schnittstelle aufweist, über die sie die zumindest einigen Ventile der Mehrzahl von Ventilen der Getriebestellvorrichtung ansteuern kann. Diese Kraftfahrzeugkomponenten-Schnittstelle kann beispielsweise durch einen ohnehin vorhandenen Bus oder eine zusätzlich vorzusehende analoge oder digitale Schnittstelle gebildet sein.

Darüber hinaus ist die erfindungsgemäße Kraftfahrzeugkomponente so ausgebildet, dass die Fahrzeugführungsrechner-Schnittstelle zum Empfang von zumindest einem von der Getriebestellvorrichtung bereitgestellten Signal ausgelegt ist, über das der Fahrzeugführungsrechner auf Zustände in der Getriebestellvorrichtung schließen kann. Wenn die Kraftfahrzeugkomponente, insbesondere der Fahrzeugführungsrechner, die gleichen Signale auswerten kann, wie der beim Stand der Technik vorgesehene weitere Controller, kann die Getriebestellvorrichtung mit minimalen Aufwand so angepasst werden, dass sich die Erfindung verwirklichen lässt.

Gemäß einem Aspekt der Erfindung kann ein System zur Ansteuerung der erfindungsgemäßen Getriebestellvorrichtung vorgesehen sein, das derart ausgebildet ist, dass der Controller der Getriebestellvorrichtung baulich zugeordnet und der weitere Controller räumlich beabstandet von der Getriebestellvorrichtung angeordnet ist. Auch im Rahmen des Systems ergeben sich die bereits anhand der erfindungsgemäßen Getriebestellvorrichtung erläuterten Eigenschaften und Vorteile, weshalb zur Vermeidung von Wiederholungen erneut auf die entsprechenden Ausführungen verwiesen wird.

Bei weiteren Ausführungsformen des Systems ist vorgesehen, dass der weitere Controller Bestandteil einer Kraftfahrzeugkomponente, insbesondere eines Fahrzeugführungsrechner, ist oder diese bildet. Besonders bevorzugt wird dabei, dass der Fahrzeugführungsrechner eine erfindungsgemäße Fahrzeugkomponente ist.

Das erfindungsgemäße Verfahren zur Herstellung eines Fail-Safe-Zustandes in der vorgenannten erfindungsgemäßen Getriebestellvorrichtung umfasst einen der beiden folgenden Schritte:
- Ansteuern von zumindest einigen Ventilen einer Mehrzahl von Ventilen der Getriebestellvorrichtung durch einen weiteren Controller der vorgenannten erfindungsgemäßen Kraftfahrzeugkomponente, wenn der der Getriebestellvorrichtung zugeordnete Controller zumindest ein Ventil der Mehrzahl von Ventilen nicht erfolgreich ansteuern kann, oder
- Ansteuern von zumindest einigen Ventilen einer Mehrzahl von Ventilen der Getriebestellvorrichtung durch den der Getriebestellvorrichtung zugeordneten Controller, wenn der weitere Controller der Kraftfahrzeugkomponente zumindest ein Ventil der Mehrzahl von Ventilen nicht erfolgreich ansteuern kann.

Auch in diesem Fall handelt es sich bei der Getriebestellvorrichtung um die erfindungsgemäße Getriebestellvorrichtung und bei dem weiteren Controller um die erfindungsgemäße Fahrzeugkomponente, vorzugsweise in Form eines Fahrzeugführungsrechners. Auf die bereits mehrfach zitierten, anhand der erfindungsgemäßen Getriebestellvorrichtung erläuterten Vorteile und Eigenschaften wird zur Vermeidung von Wiederholungen erneut verwiesen.

Die Erfindung wird nun unter Bezugnahme auf die begleitenden Zeichnungen anhand einer bevorzugten Ausführungsform beispielhaft erläutert

Es zeigen:
- Figur 1: Ein eingangs bereits erläutertes schematisches Blockschaltbild einer bekannten Getriebestellvorrichtung;
- Figur 2: ein schematisches Blockschaltbild, das eine. Ausführungsform der erfindungsgemäßen Getriebestellvorrichtung, eine Ausführungsform des erfindungsgemäßen Fahrzeugführungsrechners sowie eine Ausführungsform des Erfindungsgemäßen Systems veranschaulicht, wobei die in Blockschaltbild dargestellte Vorrichtung auch zur Durchführung des erfindungsgemäßen Verfahrens geeignet ist.

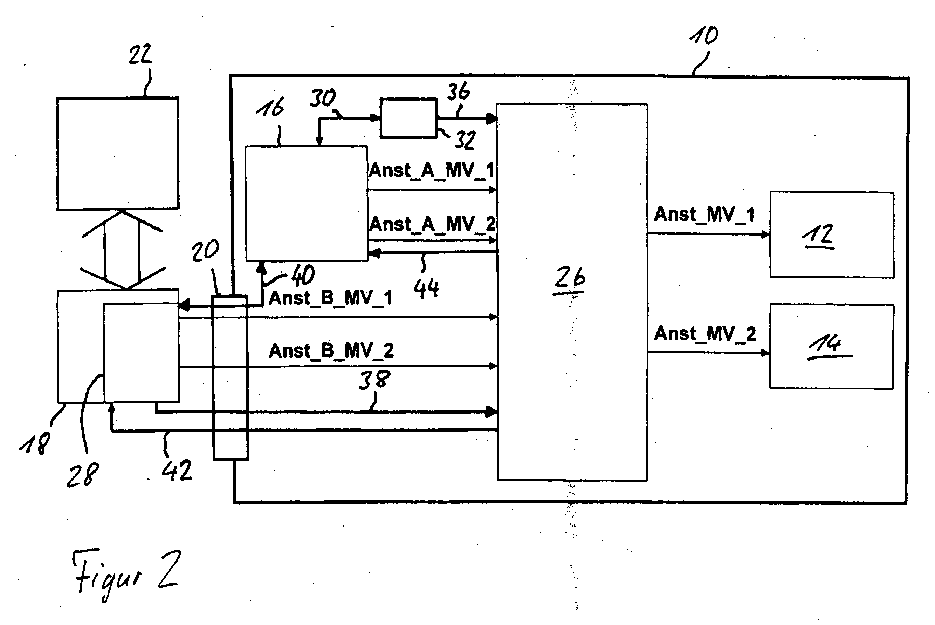

Figur 2 veranschaulicht eine Ausführungsform des erfindungsgemäßen Systems, das eine erfindungsgemäße Getriebestellvorrichtung 10 und eine erfindungsgemäße Kraftfahrzeugkomponente in Form Fahrzeugfizhrungsrechners 18 umfasst. Die Getriebestellvorrichtung 10 weist eine Mehrzahl von Magnetventilen auf, von denen nur die Ventile 12 und 14 beispielhaft dargestellt sind. Die Ventile 12 und 14 werden über eine Zugriffskontrolleinrichtung 26 angesteuert, die Signale von einem der Getriebestellvorrichtung 10 baulich zugeordneten Controller 16 und einem weiteren Controller in Form des Fahrzeugführungsrechners 18 empfängt. Der Controller 16 wird von einem Watchdog 32 überwacht, der zu diesem Zweck Signale 30 mit dem Controller 16 austauscht. Wenn der Watchdog 32 zu dem Ergebnis gelangt, dass der Controller ordnungsgemäß funktioniert, teilt er dies der Zugriffskontrolleinrichtung 26 über ein Freigabesignal 36 mit. Darüber hinaus kann der Controller 16 mit Zugriffskontrolleinrichtung 26 auch direkt Signale 44 austauschen. Um mit dem von der Getriebestellvorrichtung räumlich beabstandeten Fahrzeugführungsrechner beziehungsweise dem weiteren Controller 18 kommunizieren zu können, weist die Getriebestellvorrichtung 10 eine Schnittstelle 20 auf. Zum gleichen Zweck ist der Fahrzeugführungsrechner 18 mit einer Fahrzeugführungsrechner-Schnittstelle 28 ausgestattet. Über diese Schnittstellen 20, 28 werden die den Ventilen 12, 14 zugeordneten Ansteuersignale Anst_B_MV_1 und Anst_B_MV_2, ein Freigabesignal 38, das anzeigt, ob der Fahrzeugführungsrechner 18 die Ansteuersignale Anst_B_MV_1, Anst_B_MV_2 ordnungsgemäß liefert, Signale 38, die eine direkte Kommunkation zwischen der Zugriffskontrellernrichtung 26 und dem Fahrzeugführungsrechner 18 ermöglichen, und Signale 40 übertragen, die einen Informationsaustausch zwischen dem Controller 16 und der Zugriffskontrolleinrichtung 26 ermöglichen. Bei dem Fahrzeugsführungsrechner 18 handelt es sich um eine ohnehin im Fahrzeug vorhandene Komponente, die primär zur Ansteuerung von anderen Komponenten 22 (beispielsweise Motorkomponenten) als der Getriebestellvorrichtung 10 vorgesehen, jedoch in ihrer Funktionalität erweitert ist. Grundsätzlich kann die Funktionalität des weiteren Controllers aber erfindungsgemäß durch jede Rechenleistung gebildet werden, die unabhängig von der Getriebestellvorrichtung 10 im Fahrzeug vorhanden ist. Im Dargestellten Fall ist die Funktionalität des Fahrzeugführungsrechners 18 gegenüber dem Stand der Technik derart erweitert, dass der Fahrzeugführungsrechner 18 die Signale liefern und verarbeiten kann, die beim Stand der Technik von dem in der Getriebestellvorrichtung vorgesehenen weiteren Controller geliefert und verarbeitet wurden.

Im fehlerfreien Betrieb kann die in Figur 2 dargestellte Vorrichtung beispielsweise wie folgt arbeiten: Der Controller 16 erzeugt ein dem Ventil 12 zugeordnetes Signal Anst_A_MV_1 sowie ein dem Ventil 14 zugeordnetes Signal Anst_A_MV_2 und führt diese Signale der Zugriffskontrolleinrichtung 26 zu. Der Fahrzeugsfizhrungsrechner 18 erzeugt ebenfalls ein dem Ventil 12 zugeordnetes Signal Anst_B_MV_1 sowie ein dem Ventil 14 zugeordnetes Signal Anst_B_MV_2_{'} und führt diese Signale ebenfalls der Zugriffskontrolleinrichtung 26 zu. Weiterhin signalisiert der Watchdog 32, dass der Controller 16 ordnungsgemäß arbeitet. Auch der Fahrzeugführungsrechner 18 oder ein nicht dargestellter diesem zugeordneter weitere Watchdog erzeugt ein Fragesignal 38, das Signalisiert, dass der Fahrzeugführungsrechner 18 die Ansteuersignale Anst_B_MV_1, Anst_B_MV_2 ordnungsgemäß erzeugt. Die Zugriffskontrolleinrichtung 26 führt auf der Grundlage der ihr vorliegenden Informationen eine Plausibilitätskontrolle der Signale Anst_A_MV_1 und Anst_B_MV_1 beziehungsweise Anst_A_MV_2 und Anst_B_MV_2 durch. Im Falle einer bestandenen Plausibilitätsprüfung werden das Ventil 12 mit dem Ventilansteuersignal Anst_MV_1 und das Ventil 14 mit dem Ventilansteuersignal Anst_MV_2 in der gewünschten Weise angesteuert.

Mit dem in Figur 2 dargestellten System lässt sich das erfindungsgemäße Verfahren wie folgt durchführen:

Es sei angenommen, der Controller 16 ist ausgefallen und liefert daher als Signal Anst_A_MV_1 und Anst_A_MV_2 nur noch eine Spannung von 0 Volt. Dies wird von Watchdog 32 erkannt und der Zugriffskontrolleinrichtung 26 über das fehlende Freigabesignal 36 mitgeteilt. Die Zugriffskontrolleinrichtung 26 stellt in diesem Fall auch bei ihrer Plausibilitätsprüfung, falls sie trotz des fehlenden Freigabesignals 36 durchgeführt wird, fest, dass die von dem Controller 16 gelieferten Signale anders als die von dem Fahrzeugführungsrechner 18 gelieferten Signale durchgehend auf 0 Volt liegen. Jedenfalls verfügt die Zugriffskontrolleinrichtung 26 über die Information, dass der Controller 16 ausgefallen ist. Eventuell versucht die Zugriffskontrolleinrichtung 26 dem Controller 16 noch ein Signal 44 zuzuführen, über das der Controller 16 im Normalfall auf den Zustand der Getriebestellvorrichtung 10 schließen kann und dann entsprechend reagiert. Spätestens wenn auch ein derartiger Versuch erfolglos bleibt, informiert die Zugriffskontrolleinrichtung 26 den Fahrzeugführungsrechner 18 mit Hilfe eines über die Schnittstelle 20 und die Schnittstelle 28 zugeführten Signals 42, dass der Controller 16 ausgefallen ist und der Fail-Safe-Zustand eingenommen werden muss. Als Antwort darauf erzeugt der Fahrzeugführungsrechner 18 dem Fail-Safe-Zustand entsprechende Ansteuersignale Anst_B_MV_1 und Anst_B_MV_2, die von der Zugriffskontrolleinrichtung 26 umgesetzt beziehungsweise als Signale Anst_MV_1 und Anst_MV_2 weitergeleitet und von den Ventilen 12, 14 entsprechend umgesetzt werden. Es ist klar, dass der Controller 16 die Getriebestellvorrichtung 10 in entsprechender Weise in den Fail-Safe-Zustand bringen kann, wenn der weitere Controller 18 hinsichtlich der Ansteuerung der Ventile 12, 14 ganz oder teilweise ausfällt.

Insbesondere bei den von dem Controller und den von dem weiteren Controller erzeugten Ansteuersignalen Anst_A_MV_1, Anst_A_MV_2, Anst_B_MV_1, Anst_B_MV_2 (oder zumindest einigen dieser Signale) kann es sich um digitale Signale mit den Zuständen "logisch 0" oder "logische 1" handeln. Weiterhin können insbesondere diese Signale digital codierte Signale sein (zum Beispiel können mittels Codierung mit n Leitungen n² Zustände übertragen werden). Es ist auch denkbar, dass insbesondere die genannten Ansteuersignale digitale Signale mit einem seriellen Protokoll (zum Beispiel K-Line oder LIN) sind. Weiterhin können insbesondere die in Rede stehenden Ansteuersignale ein Bussystem beschreiben (zum Beispiel eine SPI- oder eine CAN-Schnittstelle).

Bei allen hier erwähnten Controllern kann es sich um Mikrocontroller oder sonstige dem Fachmann geläufige elektrische Schaltungen handeln, die zur Erzeugung beziehungsweise Verarbeitung der jeweiligen Signale geeignet sind. Gleiches gilt für die Zugriffskontrolleinrichtung 26. Bei den genannten Schnittstellen kann es sich sowohl um digitale als auch um analoge Schnittstellen handeln. Entsprechend können die erwähnten Signale analoge oder digitale (parallele beziehungsweise serielle) Signale sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10', 10: Getriebestellvorrichtung
- 12', 12: Ventil
- 14', 14: Ventil
- 16', 16: Controller
- 18', 18: Kraftfahrzeugkomponente/ Fahrzeugführungsrechner/Weiterer Controller
- 20: Schnittstelle
- 22: Andere Komponente(n)
- 24', 24: Überwachungssignal
- 26', 26: Zugriffskontrolleinrichtung
- 28', 28: Kraftfahrzeugkomponenten-Schnittstelle
- 30', 30: Überwachungssignal
- 32', 32: Watchdog
- 34': Weiterer Watchdog
- 36', 36: Freigabesignal
- 38', 38: Weiteres Freigabesignal
- 40', 40: Signal
- 42', 42: Signal
- 44', 44: Signal

## Patentansprüche

1. Getriebestellvorrichtung (10) mit einer Mehrzahl von Ventilen (12, 14) und mit einem Controller (16), der dazu ausgelegt ist, die Mehrzahl von Ventilen (12, 14) durch Ansteuersignale (Anst_A_MV_1, Anst_A_MV_2) anzusteuern, wobei sie eine Schnittstelle (20) für einen weiteren Controller (18) aufweist, der primär zur Ansteuerung von anderen Komponenten (22) als der Getriebestellvorrichtung (10) vorgesehen ist, und wobei über die Schnittstelle (20) durch weitere Ansteuersignale (Anst_B_MV_1, Anst_B_MV_2) zumindest einige Ventile (12, 14) der Mehrzahl von Ventilen (12, 14) angesteuert werden können, **dadurch gekennzeichnet, dass** sie über die Schnittstelle (20) zusätzlich zu den weiteren Ansteuersignalen (Anst_B_MV 1, Anst_B_MV_2) zumindest ein weiteres Signal (38) empfangen kann, das anzeigt, ob der weitere Controller (18) ordnungsgemäß arbeitet, und dass sie zusätzlich zu den Ansteuersignalen (Anst_A_MV_1, Anst_A_MV_2) ein weiteres Signal (42) erzeugen kann, das anzeigt, ob der Controller ordnungsgemäß arbeitet.

2. Getriebestellvorrichtung nach Anspruch 1, **dadurch gekennzeichnet, dass** die Ansteuerung von zumindest einigen Ventilen (12, 14) der Mehrzahl von Ventilen (12, 14) über eine Zugriffskontrolleinrichtung (26) erfolgt.

3. Getriebestellvorrichtung nach Anspruch 2, **dadurch gekennzeichnet, dass** der Controller (16) zur Ansteuerung der Ventile (12, 14) die Ansteuersignale (Anst_A_MV_1, Anst_A_MV_2) erzeugt, dass der weitere Controller zur Ansteuerung der Ventile (12, 14) die weiteren Ansteuersignale (Anst_B_MV_1, Anst_B_MV_2) erzeugt, und dass die Zugriffskontrolleinrichtung (26) auf der Grundlage des Signals (42), des weiteren Signals (38), der Ansteuersignale (Anst_A_MV_1, Anst_A_MV_2) und der weiteren Ansteuersignale (Anst_B_MV_1, Anst_B_MV_2) Ventilansteuerungssignale (Anst_MV_1, Anst_MV_2) bilden kann.

4. Getriebestellvorrichtung (10) nach einem der vorhergehenden Ansprüche, **dadurch gekennzeichnet, dass** der weitere Controller (18) Bestandteil einer Kraftfahrzeugkomponente, insbesondere in Form eines Fahrzeugführungsrechners (18), ist oder diese bildet.

5. Kraftfahrzeugkomponente (18), insbesondere Fahrzeugführungsrechner (18), die primär zur Ansteuerung von anderen Komponenten (22) eines Kraftfahrzeuges als einer Getriebestellvorrichtung (10) vorgesehen ist, wobei die Kraftfahrzeugkomponente dazu ausgelegt ist, zumindest einige Ventile (12, 14) einer Mehrzahl von Ventilen (12, 14) der Getriebestellvorrichtung (10) zumindest dann anzusteuern, wenn ein der Getriebestellvorrichtung (10) zugeordneter Controller (16) zumindest ein Ventil der Mehrzahl von Ventilen (12, 14) über Ansteuersignale (Anst_A_MV_1, Anst_A_MV_2) nicht erfolgreich ansteuern kann, und wobei sie eine Kraftfahrzeugkomponenten-Schnittstelle (28) aufweist, über die sie die zumindest einigen Ventile (12, 14) der Mehrzahl von Ventilen (12, 14) der Getriebestellvorrichtung (10) ansteuern kann, **dadurch gekennzeichnet, dass** die Kraftfahrzeugkomponenten-Schnittstelle (28) zum Empfang von zumindest einem von der Getriebestellvorrichtung (10) zusätzlich zu den Ansteuersignalen (Anst_A_MV_1, Anst_A_MV_2) bereitgestellten Signal (42) ausgelegt ist, über das die Kraftfahrzeugkomponente (18) auf Zustände in der Getriebestellvorrichtung (10) schließen kann.

6. Verfahren zur Herstellung eines Fail-Safe-Zustandes in einer Getriebestellvorrichtung (10) gemäß einem der Ansprüche 1 bis 4, wobei das Verfahren einen der beiden folgenden Schritte umfasst:
- Ansteuern von zumindest einigen Ventilen (12, 14) einer Mehrzahl von Ventilen (12, 14) der Getriebestellvorrichtung durch einen weiteren Controller (18) einer Kraftfahrzeugkomponente gemäß Anspruch 5, wenn der der Getriebestellvorrichtung (10) zugeordnete Controller (16) zumindest ein Ventil der Mehrzahl von Ventilen (12, 14) nicht erfolgreich ansteuern kann, oder
- Ansteuern von zumindest einigen Ventilen (12, 14) einer Mehrzahl von Ventilen (12, 14) der Getriebestellvorrichtung (10) durch den der Getriebestellvorrichtung (10) zugeordneten Controller (16), wenn der weitere Controller (18) der Kraftfahrzeugkomponente zumindest ein Ventil der Mehrzahl von Ventilen (12, 14) nicht erfolgreich ansteuern kann.

## Claims

1. Transmission actuator device (10) comprising a plurality of valves (12, 14) and a controller (16) that is designed for driving said plurality of valves (12, 14) by means of driving signals (Anst_A_MV_1, Anst_A_MV_2), including an interface (20) for a further controller (18) that is primarily provided for driving components (22) other than the transmission actuator device (10), and wherein at least a few valves (12, 14) among said plurality of valves (12, 14) may be driven by further driving signals (Anst_B_MV_1, Anst_B_MV_2) via said interface (20), **characterized in that** it is adapted to receive at least one further signal (38) in addition to said further driving signals (Anst_B_MV_1, Anst_B_MV_2) via said interface (20), which further signal indicates whether said further controller (18) operates properly, and that it may generate a further signal (42) in addition to said driving signals (Anst_A_MV_1, Anst_A_MV_2), which indicates whether said controller operates properly.

2. Transmission actuator device according to Claim 1, **characterized in that** at least a few valves (12, 14) among said plurality of valves (12, 14) are driven via an access controller means (26).

3. Transmission actuator device according to Claim 2, **characterized in that** said controller (16) generates said driving signals (Anst_A_MV_1, Anst_A_MV_2) for driving said valves (12, 14), that said further controller for driving said valves (12, 14) generates said further driving signals (Anst_B_MV_1, Anst_B_MV_2) and that said access controller means (26) is adapted to generate valve driving signals (Anst_MV_1, Anst_MV_2) on the basis of said signal (42), said further signal (38), said driving signals (Anst_A_MV_1, Anst_A_MV_2) and said further driving signals (Anst_B_MV_1, Anst_B_MV_2).

4. Transmission actuator device according to any of the preceding Claims, **characterized in that** said further controller (18) is a component of a motor vehicle component, in particular in the form of a vehicle driving computer (18), or constitutes same.

5. Motor vehicle component (18), in particular a vehicle driving computer (18), which is primarily provided for driving components (22) of a motor vehicle other than a transmission actuator device (10), wherein said motor vehicle component is designed for driving at least a few valves (12, 14) among a plurality of valves (12, 14) of said transmission actuator device (10) at least when a controller (16) associated with said transmission actuator device cannot successfully drive at least one valve in said plurality of valves (12, 14) by means of driving signals (Anst_A_MV_1, Anst_A_MV_2), and wherein it comprises a motor vehicle component interface (28) via which it can drive said at least some valves (12, 14) in said plurality of valves (12, 14) of said transmission actuator device (10), **characterized in that** said motor vehicle component interface (28) is designed for receiving at least one signal (42) provided by said transmission actuator device (10) in addition to said driving signals (Anst_A_MV_1, Anst_A_MV_2), by means of which said motor vehicle component (18) may conclude conditions in said transmission actuator device (10).

6. Method of establishing a fail-safe condition in a transmission actuator device (10) in accordance with any of the Claims 1 to 4, with the method comprising one of the two following steps:
- driving at least a few valves (12, 14) in a plurality of valves (12, 14) of said transmission actuator device by means of a further controller (18) of a motor vehicle component according to Claim 5 when said controller (16) associated with said transmission actuator device (10) cannot successfully drive at least one valve in said plurality of valves (12, 14), or
- driving at least a few valves (12, 14) in a plurality of valves (12, 14) of said transmission actuator device (10) by means of said controller (16) associated with said transmission actuator device (10) when said further controller (18) of said motor vehicle component cannot successfully drive at least one valve in said plurality of valves (12, 14).

## Revendications

1. Dispositif actionneur de train d'engrenages (10) comprenant une pluralité de soupapes (12, 14) et une unité de commande (16), qui est conçue pour la commande de ladite pluralité de soupapes (12, 14) moyennant des signaux de commande (Anst_A_MV_1, Anst_A_MV_2), renfermant une interface (20) pour une unité de commande supplémentaire (18), qui est pourvue, en premier lieu, pour la commande des composants (22) autres que le dispositif actionneur de train d'engrenages (10), et dans lequel il est possible de commander au moins quelques soupapes (12, 14) parmi ladite pluralité de soupapes (12, 14) moyennant des autres signaux de commande (Anst_B_MV_1, Anst_B_MV_2) via ladite interface (20), **caractérisé en ce qu'**il est apte à recevoir au moins un signal supplémentaire (38) au plus desdits autres signaux de commande (Anst_B_MV_1, Anst_B_MV_2) via ladite interface (20), lequel signal supplémentaire signale, si ladite unité de commande supplémentaire (18) fonctionne en ordre, et qu'il peut engendre un autre signal (42) au plus desdits signaux de commande (Anst_A_MV _1, Anst_A_MV_2), qui signale, si ladite unité de commande fonctionne en ordre.

2. Dispositif actionneur de train d'engrenages selon la revendication 1, **caractérisé en ce qu'**au moins quelques soupapes (12, 14) parmi ladite pluralité de soupapes (12, 14) sont commandées via une unité à moyen de contrôle d'accès (26).

3. Dispositif actionneur de train d'engrenages selon la revendication 2, **caractérisé en ce que** ladite unité de commande (16) engendre lesdits signaux de commande (Anst_A_MV_1, Anst_A_MV_2) à commander lesdites soupapes (12, 14), que ladite unité de commande supplémentaire pour la commande desdites soupapes (12, 14) engendre lesdits signaux de commande supplémentaires (Anst_B_MV_1, Anst_B_MV_2), et **en ce que** ladite unité à moyen de contrôle d'accès et que ladite unité à moyen de contrôle d'accès (26) est apte à engendre des signaux de commande des soupapes (Anst_MV_1, Anst_MV_2) sur la base dudit signal (42), dudit signal supplémentaire (38), desdits signaux de commande (Anst_A_MV 1, Anst_A_MV_2) et desdits autres signaux de commande (Anst_B_MV_1, Anst_B_MV_2).

4. Dispositif actionneur de train d'engrenages selon une quelconque des revendications précédentes, **caractérisé en ce que** ladite unité de commande supplémentaire (18) est un composant d'un véhicule automobile component, en particulier en forme d'un ordinateur de conduction d'un véhicule (18), ou constitue le dernier.

5. Composant de véhicule automobile (18), en particulier un ordinateur de conduction d'un véhicule (18), qui est envisagé, en premier lieu, pour la commande des composants (22) d'un véhicule automobile autres qu'un dispositif actionneur de train d'engrenages (10), dans lequel ledit composant de véhicule automobile est conçu pour la commande d'au moins quelques soupapes (12, 14) parmi une pluralité de soupapes (12, 14) dudit dispositif actionneur de train d'engrenages (10), au moins quand une unité de commande (16) affectée audit dispositif actionneur de train d'engrenages ne peut pas commander, avec succès, au moins une soupape dans ladite pluralité de soupapes (12, 14) moyennant des signaux de commande (Anst_A_MV_1, Anst_A_MV_2), et dans lequel il comprend une interface de composant de véhicule automobile (28), via laquelle il peut commander lesdites au moins quelques soupapes (12, 14) dans ladite pluralité de soupapes (12, 14) dudit dispositif actionneur de train d'engrenages (10), **caractérisé en ce que** ladite interface du composant de véhicule automobile (28) est conçu pour la réception d'au moins un signal (42) fait disponible par ledit dispositif actionneur de train d'engrenages (10) au plus desdits signaux de commande (Anst_A_MV-1, Anst_A_MV_2), moyennant lequel ledit composant de véhicule automobile (18) peut conclure des états dans ledit dispositif actionneur de train d'engrenages (10).

6. Procédé d'établir un état à sûreté intégrée dans un dispositif actionneur de train d'engrenages (10) selon une quelconque des revendications 1 à 4, ce procédé comprenant une des deux étapes suivantes:
- commande d'au moins quelques soupapes (12, 14) dans une pluralité de soupapes (12, 14) dudit dispositif actionneur de train d'engrenages moyennant une unité de commande supplémentaire (18) d'un composant de véhicule automobile selon la revendication 5, quand ladite unité de commande (16) affectée audit dispositif actionneur de train d'engrenages (10) n'est pas en position de commander, avec succès, au moins une soupape dans ladite pluralité de soupapes (12, 14), ou
- commande d'au moins quelques soupapes (12, 14) dans une pluralité de soupapes (12, 14) dudit dispositif actionneur de train d'engrenages (10) moyennant ladite unité de commande (16) affectée audit dispositif actionneur de train d'engrenages (10), quand ladite unité de commande supplémentaire (18) dudit composant de véhicule automobile n'est pas en position de commander, avec succès, au moins une soupape dans ladite pluralité de soupapes (12, 14).
